(19) Europäisches Patentamt
European Patent Office
Office européen des brevets

(11) **EP 1 860 008 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(51) Int Cl.:
***B60T 13/58*** *(2006.01)*

(21) Anmeldenummer: **07007475.2**

(22) Anmeldetag: **12.04.2007**

(54) **Verfahren zum Abbremsen eines Fahrzeugs**

Method for slowing down a vehicle

Procédé de freinage d'un véhicule

(84) Benannte Vertragsstaaten:
**DE FR IT SE**

(30) Priorität: **26.05.2006 DE 102006024502**

(43) Veröffentlichungstag der Anmeldung:
**28.11.2007 Patentblatt 2007/48**

(73) Patentinhaber: **WABCO GmbH**
**30453 Hannover (DE)**

(72) Erfinder:
• **Breuer, Karsten**
**88179 Oberreute (DE)**
• **Kitterer, Hartmut**
**30455 Hannover (DE)**
• **Zielke, Frank**
**30890 Barsinghausen (DE)**

(56) Entgegenhaltungen:
**WO-A1-2005/005191** **DE-A1- 10 224 399**
**US-B1- 6 456 922**

**Beschreibung**

Die Erfindung betrifft ein Verfahren zum Abbremsen eines eine einem Verschleiß unterliegende Betriebsbremseinrichtung und zumindest eine Dauerbremseinrichtung aufweisenden Fahrzeugs, insbesondere Kraftfahrzeugs, wobei eine Soll-Bewegungsgröße des Fahrzeugs mit einer Ist-Bewegungsgröße des Fahrzeugs verglichen wird und wobei bei einer eine Verminderung einer Längsbeschleunigung des Fahrzeugs zum Erreichen der Soll-Bewegungsgröße erfordernden Bewegungsgrößenabweichung der Ist-Bewegungsgröße von der Soll-Bewegungsgröße die Dauerbremseinrichtung die Längsbeschleunigung des Fahrzeugs vermindernd aktiviert wird.

Aus WO 01/79017 A1 ist ein Verfahren zur Einstellung einer eine Ist-Bewegungsgröße bildenden Fahrzeuglängsgeschwindigkeit auf eine eine Soll-Bewegungsgröße bildende Sollgeschwindigkeit eines Fahrzeugs mit ansteuerbaren Bremseinheiten bekannt. Dabei ist vorgesehen, dass bei Vorliegen eines ersten Betriebszustands, bei dem die Fahrzeuglängsgeschwindigkeit die Sollgeschwindigkeit in einem vorgebbaren Ausmaß überschreitet, die Einstellung der Sollgeschwindigkeit durch Ansteuerung der Bremseinheiten geschieht und dass bei Vorliegen eines zweiten Betriebszustands, bei dem die Fahrzeuglängsgeschwindigkeit die Sollgeschwindigkeit in dem vorgebbaren Ausmaß überschreitet, die Einstellung der Sollgeschwindigkeit ohne Ansteuerung der Bremseinheiten geschieht. Ein Ansteuern der Bremseinheiten soll unterlassen werden, solange kein bezogen auf die Bremseinheiten äußeres Abbruchkriterium wie ein Hindernis in einem vorhergesagten Kursbereich des Fahrzeugs, ein Überschreiten einer zeitlichen Begrenzung, eine Verringerung einer Setzgeschwindigkeit des Fahrzeugs durch Betätigung eines Bedienelementes oder eine Deaktivierung eines Abstands- und Geschwindigkeitsregelungssystems vorliegt.

Wird ein Ansteuern der Bremseinheiten unterlassen, so kann das Fahrzeug durch einen Fahrwiderstand und durch ein Schleppmoment eines Motors des Fahrzeugs abgebremst werden.

Des Weiteren ist es aus WO 92/00212 A1 bekannt, als Betriebsgröße einer Bremse eines Fahrzeugs eine Bremsentemperatur zu errechnen und zu überwachen. Bei Erreichen einer vorgegebenen Grenztemperatur an der Bremse soll eine Fahrerwarnung und/oder eine Motormomentreduzierung und/oder eine Abschaltung einer Antriebsschlupfregelung erfolgen. Die WO2005005191 betrifft ein Verfahren zur Durchführung eines Bremsvorgangs in einem Fahrzeug mit Automatikgetriebe und einer automatischen Geschwindigkeitsregelung. Die Geschwindigkeitsregelung steuert die Beschleunigung und das Bremsen des Fahrzeugs, um eine eingestellte Geschwindigkeit zu erreichen, unter Berücksichtigung des Abstands zum vorausfahrenden Fahrzeug. Es werden ständig Daten-Simulationen durchgeführt, wie das Fahrzeug in der Zukunft angetrieben werden soll, für eine Reihe von verschiedenen Kombinationen von Motordrehzahl, bei der ein Gangwechsel stattfindet, Schaltstufe und Bremssequenz und eine Bremssequenz mit zugehörigen Gangwechsel. Das Fahrzeug ist mit wenigstens zwei verschiedenen Bremssystemen ausgestattet, beispielsweise Betriebsbremse und Hilfsbremse. Die US6456922B1 betrifft ein Antiblockier-Bremssteuersystem für ein Fahrzeug, das den Reifenschlupf erhöht, wenn die Fahrzeugbremskomponente eine übermäßige thermische Belastung erreicht hat. Das Bremssteuersystem enthält einen Temperatursensor zum Erfassen der Temperatur einer bremsbezogenen Komponente, und Raddrehzahlsensoren zum Ermitteln der Drehgeschwindigkeit der Räder. Ferner umfasst das Bremssteuersystem einen Controller, um die Bremsaktuatoren in Übereinstimmung mit einem Reifenschlupfzu steuern. Die Steuerung bestimmt die zulässige Höhe des Reifenschlupf beim Bremsen und erhöht den Reifenschlupf, wenn die thermische Belastung, insbesondere die Temperatur, an den Radbremsen zu hoch ist. Die DE10224399A1 betrifft ein Fahrzeug mit einer Abstandsregelung zu einem vorausfahrenden Fahrzeug, wobei bei Unterschreitung eines Mindestabstandes verschiedene Verzögerungseinrichtungen automatisch betätigt werden. Insbesondere wird eine ASR-Funktion zur Fahrzeug Verzögerung aktiviert.

Der Erfindung liegt die Aufgabe zugrunde, ein Verfahren zum Abbremsen eines Fahrzeugs der eingangs genannten Art anzugeben, das ein wirksames Abbremsen des Fahrzeugs bei gleichzeitig vergleichsweise nur geringem Verschleiß der Betriebsbremseinrichtung ermöglicht.

Diese Aufgabe wird gelöst mit einem Verfahren nach Anspruch 1, bei dem eine Betriebsgröße der Betriebsbremseinrichtung erfasst wird und bei dem in Abhängigkeit der Betriebsgröße und der Bewegungsgrößenabweichung von Ist-Bewegungsgröße und Soll-Bewegungsgröße bei einer eine Verminderung der Längsbeschleunigung des Fahrzeugs zum Erreichen der Soll-Bewegungsgröße erfordernden Bewegungsgrößenabweichung der Ist-Bewegungsgröße von der Soll-Bewegungsgröße zusätzlich die Betriebsbremseinrichtung die Längsbeschleunigung des Fahrzeugs vermindernd aktiviert wird. Die Unteransprüche enthalten besonders zweckmäßige und vorteilhafte Weiterbildungen der Erfindung.

Ein Abbremsen eines Fahrzeugs nach dem erfindungsgemäßen Verfahren mit Nutzung der Betriebsbremseinrichtung kann allgemein dann erfolgen, wenn unter Berücksichtigung einer Betriebsgröße der Betriebsbremseinrichtung eine Bewegungsgrößenabweichung vorliegt, die eine Verminderung einer Längsbeschleunigung des Fahrzeugs erforderlich macht. Das ist zum Beispiel dann der Fall, wenn das Fahrzeug zu schnell ist, das heißt beispielsweise wenn das Fahrzeug eine zu große Fahrgeschwindigkeit und/oder eine zu große Beschleunigung und/oder einen zu geringen Abstand zu einem vorausfahrenden, weiteren Fahrzeug aufweist. Die Ist-Bewegungsgröße und die Soll-Bewegungsgröße, die die Bewegungsgrößenabweichung bestimmen, sind allgemein Größen, die von einer Bewegung des Fahrzeugs abhängig sind und/oder mit der Bewegung des Fahrzeugs, insbesondere dessen Längsbeschleunigung, in Zusammenhang stehen. Die Bewegungsgrößenabweichung, die ein Abbremsen des Fahrzeugs erforderlich macht, kann fest vorgegeben oder zum Beispiel auch einstellbar sein, wobei es sowohl denkbar ist, dass bereits eine Bewegungsgrößenabweichung ungleich null zu einem Abbremsen mittels der Betriebsbremseinrichtung führt als auch, dass ein entsprechendes Abbremsen bei einer Bewegungsgrößenabweichung erfolgt, die ein bestimmtes, von null verschiedenes Maß übersteigt. Die Bewegungsgrößenabweichung kann vorzugsweise als Differenz der Ist-Bewegungsgröße und der Soll-Bewegungsgröße berechnet werden. Das Aktivieren der Betriebsbremseinrichtung kann sowohl bedeuten, dass die Betriebsbremseinrichtung überhaupt erst eingeschaltet wird als auch, dass die Betriebsbremseinrichtung intensiviert betätigt wird. Erfindungsgemäß ist vorgesehen, dass bevorzugt und grundsätzlich die Dauerbremseinrichtung des Fahrzeugs, die zum Beispiel ein Motorbremssystem und/oder einen Retarder umfassen kann, zum Abbremsen des Fahrzeugs eingesetzt wird. Ist mit der Dauerbremseinrichtung nur eine - zumindest in einem momentanen Fahrzustand - nicht ausreichende Bremsleistung aufzubringen, so wird zusätzlich die Betriebsbremseinrichtung, die beispielsweise eine Zweikreis-Druckluftbremsanlage mit Radbremsen umfassen kann, des Fahrzeugs genutzt, wobei aber über die Erfassung der Betriebsgröße der Betriebsbremseinrichtung deren momentaner Betriebszustand ebenso berücksichtigt wird wie die momentan tatsächlich für das Fahrzeug benötigte Bremsleistung; für Letztere ist die Bewegungsgrößenabweichung ein Indikator. Die Soll-Bewegungsgröße kann in einem Grenzfall eine sehr hohe negative Beschleunigung oder eine Geschwindigkeit mit dem Wert Null sein, um das Fahrzeug bis zum Stillstand abzubremsen.

Grundsätzlich ist die Dauerbremseinrichtung nicht verschleißbehaftet, wohingegen die Betriebsbremseinrichtung einem Verschleiß unterliegt, insbesondere sind gegebenenfalls Bremsbeläge und/oder Bremsscheiben und/oder Bremstrommeln der Betriebsbremseinrichtung nach Abnutzung zu ersetzen, wodurch nicht nur Material- und Montagekosten, sondern auch Stillstandzeiten des Fahrzeugs anfallen. Das oben genannte Motorbremssystem kann beispielsweise eine Motorbremse mit Auspuffklappe, eine so genannte Auspuffklappenbremse, und/oder zum Beispiel eine Motorbremse mit Konstantdrossel aufweisen; der Retarder kann zum Beispiel ein hydrodynamischer oder ein elektrodynamischer Retarder sein. Vorteilhaft können mit der Erfindung die Wartungs- und Instandhaltungskosten des Fahrzeugs wesentlich reduziert und die Stillstandzeiten, die insbesondere bei Nutzfahrzeugen einen unerwünschten und kostenintensiven Nutzungsausfall bedeuten können, nennenswert verringert werden. Das erfindungsgemäße Verfahren bietet somit besondere Vorteile bei Nutzfahrzeugen, die regelmäßig hohe abzubremsende Massen aufweisen und über vergleichsweise lange Fahrtstrecken bewegt werden. Weiterhin ist es allgemein von besonderem Vorteil, dass bei der Erfindung mit der Betriebsgröße eine einen internen Zustand der Betriebsbremseinrichtung unmittelbar beschreibende oder zumindest abschätzende Größe der Betriebsbremseinrichtung für das Verfahren zum Abbremsen berücksichtigt wird, wodurch es nicht nur in wirkungsvoller Weise ermöglicht ist, das Abbremsen des Fahrzeugs besonders schnell und effizient unter genauer Abstimmung der Dauerbremseinrichtung und der Betriebsbremseinrichtung zueinander durchzuführen, sondern insbesondere auch die Betriebsbremseinrichtung in einfacher Weise so betrieben werden kann, dass ihr Verschleiß gering gehalten wird. Die Erfindung ermöglicht eine optimierte Nutzung eines verschleißmindernden Potentials der Dauerbremseinrichtung zum Abbremsen des Fahrzeugs bei gleichzeitiger Verhinderung kritischer Fahrzustände. Insbesondere kann mit dem erfindungsgemäßen Verfahren eine Notbremsung des Fahrzeugs jederzeit und sicher - auch bis zu einem Stillstand des Fahrzeugs - durchgeführt werden.

Besonders vorteilhaft kann das erfindungsgemäße Verfahren zum Abbremsen eines eine Abstandsregeleinrichtung aufweisenden Fahrzeugs verwendet werden. Mit Hilfe der Abstandsregeleinrichtung kann das zu regelnde, abzubremsende Fahrzeug einem vorausfahrenden Fahrzeug längsdynamisch automatisiert folgen. Dabei kann es beispielsweise vorkommen, dass das nachfolgende, zu regelnde Fahrzeug fortwährend Bremsleistung aufbringen muss, um nicht mit dem vorausfahrenden Fahrzeug zu kollidieren. Eine solche Fahrsituation kann zum Beispiel in einem Gefälle auftreten, und zwar insbesondere dann, wenn es sich bei dem nachfolgenden Fahrzeug um ein schweres Fahrzeug, beispielsweise ein Nutzfahrzeug, handelt. Dabei kann es vorkommen, dass für ein hinreichendes Abbremsen des nachfolgenden, abzubremsenden Fahrzeugs zusätzlich zu der Dauerbremseinrichtung die nicht verschleißfreie Betriebsbremseinrichtung eingesetzt werden muss. Wird die Betriebsbremseinrichtung kontinuierlich zum Halten des Abstandes zu dem vorausfahrenden Fahrzeug eingesetzt, so verschleißt sie nicht nur übermäßig, sondern sie kann sich auch so stark erhitzen, dass ihre Wirkung aufgrund so genannten Fadings nachlässt. Diese Schwierigkeiten können mit der Erfindung vermieden werden, da erfindungsgemäß der Einsatz der Betriebsbremseinrichtung intelligent in Abhängigkeit des durch die Betriebsgröße abgebildeten Zustands der Betriebsbremseinrichtung und der erforderlichen Bremsleistung des Fahrzeugs gehandhabt wird. Mit der Erfindung kann es vorteilhaft zu einem die Betriebsbremseinrichtung schonenden Wechselspiel von Phasen, in denen nur mit Dauerbremseinrichtung gebremst wird und es zu einer bis zu einem gewissen Grade verschlechterten kinematischen Situation des Fahrzeugs kommen kann, und Phasen, in denen sowohl mit Dauerbremseinrichtung als auch mit Betriebsbremseinrichtung gebremst wird und sich die kinematische Situation des Fahrzeugs entschärft, kommen. In den erstgenannten Phasen kann eine Regeneration, insbesondere Abkühlung, der Betriebsbremseinrichtung erfolgen.

Grundsätzlich ist es denkbar, die Bewegungsgrößenabweichung aus beliebigen Bewegungsgrößen zu bestimmen. Gemäß einer vorteilhaften Weiterbildung der Erfindung jedoch ist die Ist-Bewegungsgröße eine Ist-Geschwindigkeit oder Ist-Beschleunigung des Fahrzeugs, und die Soll-Bewegungsgröße ist eine SollGeschwindigkeit oder Soll-Beschleunigung des Fahrzeugs; vorzugsweise handelt es sich bei den Geschwindigkeiten jeweils um eine Längsgeschwindigkeit und bei den Beschleunigungen jeweils um eine Längsbeschleunigung. Dadurch kann in einfacher Weise auf in einem Fahrzeug regelmäßig erfasste und somit bereits vorliegende Größen für das erfindungsgemäße Verfahren zurückgegriffen werden.

Insbesondere in Verbindung mit einer Abstandsregeleinrichtung ist es von besonderem Vorteil, wenn die Ist-Bewegungsgröße ein Ist-Abstand oder ein für einen zukünftigen Zeitpunkt vorausberechneter Ist-Abstand des Fahrzeugs zu einem in Fahrtrichtung vor dem Fahrzeug angeordneten Hindernis ist und wenn die Soll-Bewegungsgröße ein Soll-Abstand oder ein für einen zukünftigen Zeitpunkt vorausberechneter Soll-Abstand des Fahrzeugs zu dem Hindernis ist. Dabei kann der Ist-Abstand beispielsweise mittels einer Abstandsmessvorrichtung des Fahrzeugs direkt gemessen werden. Der Soll-Abstand kann zum Beispiel von einem Fahrer des Fahrzeugs manuell eingestellt werden; es ist aber beispielsweise auch denkbar, dass der Soll-Abstand mit Hilfe der Abstandsregeleinrichtung und gegebenenfalls unter Vorgabe zum Beispiel eines einzuhaltenden zeitlichen Abstandes zu einem vorausfahrenden Fahrzeug oder einer einzuhaltenden Geschwindigkeit des eigenen, nach dem erfindungsgemäßen Verfahren abzubremsenden Fahrzeugs ermittelt wird. Anstelle des Ist-Abstandes oder vorausberechneten Ist-Abstandes kann die Ist-Bewegungsgröße auch ein Ist-Zeitabstand oder ein vorausberechneter Zeitraum bis zu einer potentiellen Kollision des Fahrzeugs mit dem Hindernis (time to collision) sein, wobei die Soll-Bewegungsgröße dann ein entsprechender Soll-Zeitabstand oder ein vorausberechneter Mindestzeitraum bis zu der Kollision ist.

Von besonderem Vorteil ist es, wenn die erfasste Betriebsgröße eine Temperatur der Betriebsbremseinrichtung, beispielsweise eine Temperatur eines Bremsbelags und/oder einer Bremsscheibe und/oder einer Bremstrommel der Betriebsbremseinrichtung, ist. Mit der Erfindung kann dann der Verschleiß der Betriebsbremseinrichtung, der sich grundsätzlich mit steigender Temperatur überproportional erhöht, wirkungsvoll weiter vermindert sowie eine Überhitzung der Betriebsbremseinrichtung vermieden werden.

Gemäß einer anderen vorteilhaften Weiterbildung der Erfindung wird bei einer erfassten Betriebsgröße, insbesondere Temperatur, unterhalb einer Setz-Betriebsgröße, insbesondere Setz-Temperatur, und einer Bewegungsgrößenabweichung oberhalb einer ersten Setz-Bewegungsgrößenabweichung die Betriebsbremseinrichtung aktiviert; dabei erfolgt ein Vergleich der erfassten Betriebsgröße mit der Setz-Betriebsgröße sowie der Bewegungsgrößenabweichung mit der ersten Setz-Bewegungsgrößenabweichung. Somit wird die Betriebsbremseinrichtung aktiviert, wenn die Bewegungsgrößenabweichung, die zum Beispiel eine Differenz einer Ist- und einer Soll-Beschleunigung ausdrückt, ein durch die Setz-Bewegungsgrößenabweichung, die zum Beispiel fest vorgegeben oder von einem Fahrer eingestellt oder beispielsweise in einer Abstandsregeleinrichtung berechnet sein kann, vorgegebenes Maß übersteigt und andererseits die Betriebsgröße, insbesondere Temperatur, nicht zu hoch ist; Letzteres ist dann der Fall, wenn die Betriebsgröße die Setz-Betriebsgröße, insbesondere eine Setz-Temperatur, nicht übersteigt. Zu einer zuverlässigen Vermeidung einer unmittelbaren Gefahrensituation, zum Beispiel einer Gefahr einer Kollision des abzubremsenden Fahrzeugs mit einem Hindernis, ist es sehr vorteilhaft, wenn bei einer erfassten Betriebsgröße, insbesondere Temperatur, oberhalb der Setz-Betriebsgröße, insbesondere Setz-Temperatur, und einer Bewegungsgrößenabweichung oberhalb einer zweiten Setz-Bewegungsgrößenabweichung, wobei die zweite Setz-Bewegungsgrößenabweichung größer ist als die erste Setz-Bewegungsgrößenabweichung (also eine kinematisch kritischere Fahrsituation kennzeichnet), die Betriebsbremseinrichtung aktiviert wird. Dabei erfolgt mithin ein Vergleich der erfassten Betriebsgröße mit der Setz-Betriebsgröße sowie der Bewegungsgrößenabweichung mit der zweiten Setz-Bewegungsgrößenabweichung.

Gemäß einer anderen vorteilhaften Weiterbildung der Erfindung wird die Betriebsbremseinrichtung zumindest solange aktiviert, bis die Bewegungsgrößenabweichung kleiner ist als die zweite Setz-Bewegungsgrößenabweichung, und zwar insbesondere bis die Bewegungsgrößenabweichung auch kleiner ist als die erste Setz-Bewegungsgrößenabweichung. Auf diese Weise kann das Fahrzeug sicher abgebremst werden, und es wird vermieden, dass unmittelbar nach Beendigung eines Eingriffs der Betriebsbremseinrichtung diese erneut aktiviert werden muss.

Eine besonders gute und zuverlässige Unterstützung eines Fahrers des abzubremsenden Fahrzeugs, die den Fahrer bei einem Führen des Fahrzeugs wesentlich entlastet, kann vorteilhaft dadurch erreicht werden, dass ein Vergleich der erfassten Betriebsgröße mit der Setz-Betriebsgröße und ein Vergleich der Bewegungsgrößenabweichung mit der ersten und/oder der zweiten Setz-Bewegungsgrößenabweichung in regelmäßigen Zeitabständen erfolgt. Beispielsweise können diese Zeitabstände jeweils 50 ms betragen.

Eine wesentliche Erhöhung der Verkehrssicherheit und eine erhebliche zusätzliche Entlastung des Fahrers des abzubremsenden Fahrzeugs kann vorteilhaft erzielt werden, wenn das abzubremsende Fahrzeug einem vorausfahrenden Fahrzeug folgt und wenn mittels einer Abstandsregeleinrichtung des abzubremsenden Fahrzeugs eine automatische Regelung eines Abstandes zwischen dem abzubremsenden Fahrzeug als zu regelndem Fahrzeug und dem vorausfahrenden Fahrzeug erfolgt.

Das erfindungsgemäße Verfahren kann dabei besonders einfach durchgeführt werden, wenn gemäß einer vorteilhaften Weiterbildung der Erfindung die Ist-Bewegungsgröße der für einen zukünftigen Zeitpunkt vorausberechnete Ist-Abstand des zu regelnden Fahrzeugs zu dem vorausfahrenden Fahrzeug ist und wenn die Soll-Bewegungsgröße ein vorgegebener Mindestabstand des zu regelnden Fahrzeugs zu dem vorausfahrenden Fahrzeug ist. Der Mindestabstand kann vorzugsweise einstellbar sein.

Die Erfindung lässt zahlreiche Ausführungsformen zu. Zur weiteren Verdeutlichung ihres Grundprinzips werden verschiedene davon anhand der beigefügten Zeichnung näher beschrieben, wobei sich entsprechende Teile jeweils mit gleichen Bezugszeichen versehen sind. Die Zeichnung zeigt in

Figur 1 ein Ablaufdiagramm eines ersten Verfahrens zum Abbremsen eines Fahrzeugs,

Figur 2 ein Ablaufdiagramm eines erweiterten Verfahrens nach Figur 1,

Figur 3 ein Ablaufdiagramm einer Bewertung einer kinematischen Situation des Fahrzeugs in einem Verfahren zum Abbremsen des Fahrzeugs und

Figur 4 ein Ablaufdiagramm eines erweiterten Verfahrens zum Abbremsen eines Fahrzeugs.

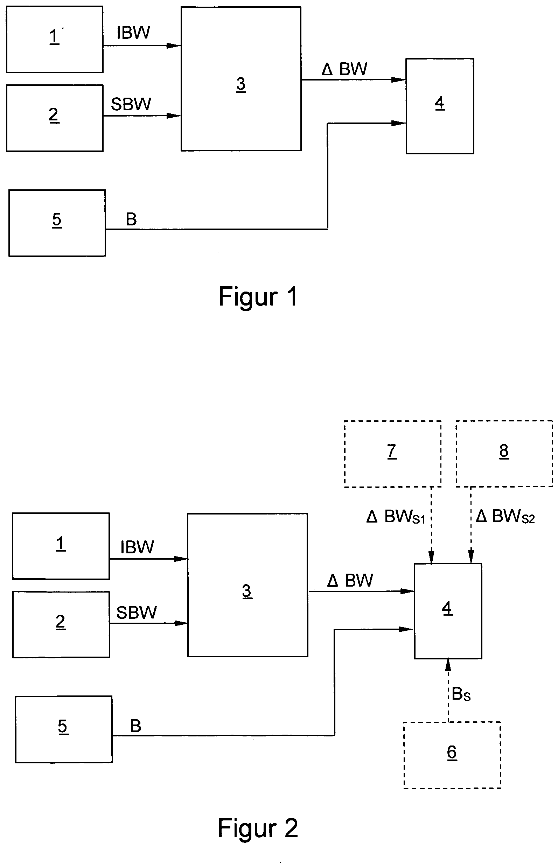

Figur 1 zeigt beispielhaft ein Ablaufdiagramm für ein Verfahren zum Abbremsen eines als Nutzfahrzeug ausgebildeten Fahrzeugs, das eine einem Verschleiß unterliegende - allgemein auch bezeichnet als verschleißbehaftete - Betriebsbremseinrichtung und eine Dauerbremseinrichtung aufweist. In einem ersten Eingangsblock 1 wird eine Ist-Bewegungsgröße IBW erfasst, insbesondere gemessen und/oder berechnet. In einem zweiten Eingangsblock 2 wird eine mit der Ist-Bewegungsgröße IBW korrespondierende Soll-Bewegungsgröße SBW erfasst; die Soll-Bewegungsgröße SBW kann zum Beispiel von einem Fahrer des Fahrzeugs manuell eingestellt oder beispielsweise aus einer Eingabe des Fahrers berechnet werden. Es ist auch denkbar, dass die Soll-Bewegungsgröße zum Beispiel von einer Abstandsregeleinrichtung des Fahrzeugs berechnet und vorgegeben wird.

Aus dem Eingangsblock 1 wird die Ist-Bewegungsgröße IBW und aus dem Eingangsblock 2 die Soll-Bewegungsgröße SBW an einen Vergleichsblock 3 weitergegeben. In dem Vergleichsblock 3 wird die Soll-Bewegungsgröße SBW mit der Ist-Bewegungsgröße IBW verglichen, woraus sich eine Bewegungsgrößenabweichung $\Delta$BW, die auch null sein kann, ergibt. Bei dem Vergleich wird beispielsweise eine Differenz von Ist-Bewegungsgröße IBW und Soll-Bewegungsgröße SBW gebildet. Die Bewegungsgrößenabweichung $\Delta$BW ist die vorgenannte Differenz. Die Bewegungsgrößenabweichung $\Delta$BW wird an einen Auswerteblock 4 weitergegeben. In den Auswerteblock 4 geht zudem eine Betriebsgröße B der Betriebsbremseinrichtung, die in einem dritten Eingangsblock 5 erfasst, insbesondere gemessen und/oder berechnet, wird, ein.

Ein erweitertes Verfahren ist in einem Ablaufdiagramm in Figur 2 beispielhaft dargestellt. Bei diesem Verfahren gehen - angedeutet durch eine gestrichelte Darstellung - optional in den Auswerteblock 4 weitere Größen ein. Dabei kann in einem vierten Eingangsblock 6 beispielsweise eine - zum Beispiel von einer Auswerteeinheit berechnete oder von einem Fahrer des Fahrzeugs manuell eingegebene - Setz-Betriebsgröße $B_S$ der Betriebsbremseinrichtung erfasst werden, die an den Auswerteblock 4 weitergegeben wird. In einem fünften Eingangsblock 7 kann zum Beispiel eine erste Setz-Bewegungsgrößenabweichung $\Delta BW_{S1}$ und in einem sechsten Eingangsblock 8 beispielsweise eine zweite Setz-Bewegungsgrößenabweichung $\Delta BW_{S2}$ erfasst werden, wobei die jeweilige Setz-Bewegungsgrößenabweichung $\Delta BW_{S1}$, $\Delta BW_{S2}$ ebenfalls an den Auswerteblock 4 weitergegeben wird. Die Setz-Bewegungsgrößenabweichungen $\Delta BW_{S1}$, $\Delta BW_{S2}$ können zum Beispiel von einer Auswerteeinheit, beispielsweise einer Auswerteeinheit der Abstandsregeleinrichtung, berechnet oder manuell eingegeben sein und stellen zwei verschieden hohe Schwellen dafür dar, wie kritisch eine Fahrsituation ist.

Aus den in den Auswerteblock 4 nach Figuren 1, 2 eingehenden Größen Betriebsgröße B und Bewegungsgrößenabweichung $\Delta$BW sowie gegebenenfalls Setz-Betriebsgröße $B_S$ und/oder erste Setz-Bewegungsgrößenabweichung $\Delta BW_{S1}$ und/oder zweite Setz-Bewegungsgrößenabweichung $\Delta BW_{S2}$ wird in dem Auswerteblock 4 eine Bewertung einer kinematischen Situation des Fahrzeugs vorgenommen, das heißt es wird eine momentane Fahrsituation des Fahrzeugs unter kinematischen Gesichtspunkten beurteilt. In Abhängigkeit von dieser Bewertung wird die Betriebsbremseinrichtung des Fahrzeugs zusätzlich zu der Dauerbremseinrichtung aktiviert.

Bei dem oben genannten Verfahren zum Abbremsen des Fahrzeugs wird die Soll-Bewegungsgröße SBW mit der Ist-Bewegungsgröße IBW verglichen, und es wird bei einer eine Verminderung einer Längsbeschleunigung des Fahrzeugs zum Erreichen der Soll-Bewegungsgröße SBW erfordernden Bewegungsgrößenabweichung $\Delta$BW die Dauerbremseinrichtung des Fahrzeugs aktiviert, so dass die Längsbeschleunigung vermindert wird. Außerdem wird in Abhängigkeit der Betriebsgröße B der Betriebsbremseinrichtung und der Bewegungsgrößenabweichung $\Delta$BW bei einer eine Verminderung der Längsbeschleunigung des Fahrzeugs zum Erreichen der Soll-Bewegungsgröße SBW erfordernden Bewegungsgrößenabweichung $\Delta$BW zusätzlich die Betriebsbremseinrichtung des Fahrzeugs aktiviert.

Beispielhaft kann das abzubremsende Fahrzeug einem vorausfahrenden Fahrzeug folgen und eine Abstandsregeleinrichtung aufweisen, wobei mittels der Abstandsregeleinrichtung des abzubremsenden Fahrzeugs eine automatische Regelung eines Abstandes zwischen dem abzubremsenden, nachfolgenden Fahrzeug als zu regelndem Fahrzeug und dem vorausfahrenden Fahrzeug erfolgt. Dabei kann die Ist-Bewegungsgröße IBW vorzugsweise ein für einen zukünftigen Zeitpunkt t vorausberechneter Ist-Abstand dx des zu regelnden Fahrzeugs zu dem vorausfahrenden Fahrzeug und die Soll-Bewegungsgröße SBW ein Mindestabstand $dx_{min}$ des zu regelnden Fahrzeugs zu dem vorausfahrenden Fahrzeug sein. Die Berechnung des Ist-Abstandes dx zu dem Zeitpunkt t kann zum Beispiel gemäß folgender Formel erfolgen:

$$dx(t) = dx_0 + (v_{v,o} - v_{ego,0}) \cdot t + (a_{v,0} - a_{ego,0}) \cdot \frac{t^2}{2},$$

wobei $dx_0$ ein gemessener, momentaner Abstand zwischen den Fahrzeugen, $v_{ego,0}$ eine gemessene, momentane Fahrgeschwindigkeit des nachfolgenden, abzubremsenden Fahrzeugs, $v_{v,0}$ eine gemessene oder berechnete, momentane Fahrgeschwindigkeit des vorausfahrenden Fahrzeugs, $a_{ego,0}$ eine gemessene oder berechnete, momentane Beschleunigung des nachfolgenden, abzubremsenden Fahrzeugs und $a_{v,0}$ eine gemessene oder berechnete, momentane Beschleunigung des vorausfahrenden Fahrzeugs ist. Wird beispielsweise t = 5 s gesetzt, so kann der Ist-Abstand dx zu einem zukünftigen Zeitpunkt t = 5 s vorausberechnet werden. Liegt dieser vorausberechnete Ist-Abstand dx unter dem Mindestabstand $dx_{min}$, der zum Beispiel 10 m betragen kann, so ergibt sich neben einer von null abweichenden, negativen Bewegungsgrößenabweichung ΔBW, dass die kinematische Situation des zu regelnden, nachfolgenden Fahrzeugs als kritisch angesehen wird.

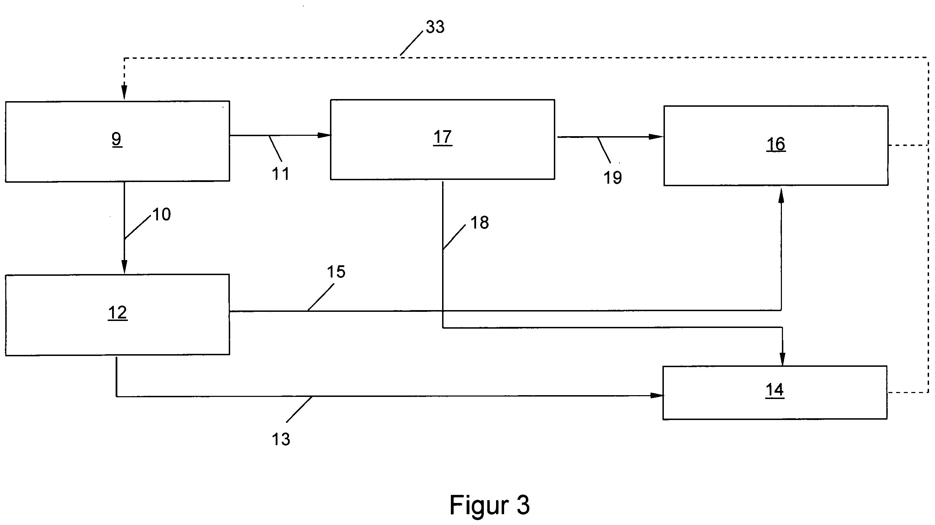

Eine Bewertung der kinematischen Situation des Fahrzeugs, wie sie beispielhaft in dem Auswerteblock 4 nach Figuren 1, 2 vorgenommen werden kann, ist in Figur 3 anhand eines weiteren Ablaufdiagramms dargestellt. In einem ersten Block 9 wird dabei beurteilt, ob die erfasste Betriebsgröße B in einem als normal angesehenen Bereich liegt. Beispielsweise ist die erfasste Betriebsgröße B eine Temperatur T der Betriebsbremseinrichtung; liegt die Betriebsgröße B unter der Setz-Betriebsgröße $B_S$, das heißt ist B < $B_S$ beziehungsweise in diesem konkreten Fall T < $T_S$, wobei $T_S$ eine Setz-Temperatur bezeichnet, so wird in Richtung eines senkrechten Pfeiles 10 weiter verfahren. Gilt hingegen B > $B_S$ beziehungsweise T > $T_S$, so wird in Richtung eines waagerechten Pfeiles 11 weiter verfahren.

Im erstgenannten Fall wird in einem ersten Zwischenblock 12 beurteilt, ob entsprechend der momentanen kinematischen Situation ein schnelleres und/oder stärkeres Abbremsen erforderlich ist als es mit der Dauerbremseinrichtung durchführbar ist. Dafür kann zum Beispiel beurteilt werden, ob die Bewegungsgrößenabweichung ΔBW die erste Setz-Bewegungsgrößenabweichung $ΔBW_{S1}$ überschreitet, also ob gilt: ΔBW > $ΔBW_{S1}$. Ist das der Fall, so wird in Verfolgung eines ersten Ausgangspfeils 13 dieses Zwischenblocks 12 ein erster Endblock 14 erreicht, der für eine zusätzliche Aktivierung der Betriebsbremseinrichtung des Fahrzeugs steht. Ist hingegen ΔBW < $ΔBW_{S1}$, so wird in Verfolgung eines zweiten Ausgangspfeils 15 dieses Zwischenblocks 12 ein zweiter Endblock 16 erreicht, der dafür steht, dass die Betriebsbremseinrichtung nicht zusätzlich zu der Dauerbremseinrichtung des Fahrzeugs aktiviert wird.

Im oben zweitgenannten Fall, das heißt wenn B > $B_S$, wird in einem zweiten Zwischenblock 17 beurteilt, ob die momentane kinematische Situation des Fahrzeugs ein ganz erheblich schnelleres und/oder stärkeres Abbremsen erforderlich macht als es mit der Dauerbremseinrichtung durchführbar ist. Dafür kann zum Beispiel beurteilt werden, ob die Bewegungsgrößenabweichung ΔBW die zweite Setz-Bewegungsgrößenabweichung $ΔBW_{S2}$ überschreitet, als ob gilt: ΔBW > $ΔBW_{S2}$, wobei gleichzeitig die zweite Setz-Bewegungsgrößenabweichung $ΔBW_{S2}$ größer ist als die erste Setz-Bewegungsgrößenabweichung $ΔBW_{S1}$, also: $ΔBW_{S2}$ > $ΔBW_{S1}$. Ist das der Fall, so wird in Verfolgung eines ersten Ausgangspfeils 18 dieses Zwischenblocks 17 der erste Endblock 14 erreicht, der für eine zusätzliche Aktivierung der Betriebsbremseinrichtung des Fahrzeugs steht. Ist hingegen ΔBW < $ΔBW_{S2}$ bei $ΔBW_{S2}$ > $ΔBW_{S1}$, so wird in Verfolgung eines zweiten Ausgangspfeils 19 dieses Zwischenblocks 17 der zweite Endblock 16 erreicht, der dafür steht, dass die Betriebsbremseinrichtung nicht zusätzlich zu der Dauerbremseinrichtung des Fahrzeugs aktiviert wird.

Sowohl ausgehend von dem ersten Endblock 14 als auch ausgehend von dem zweiten Endblock 16 führt ein gestrichelt dargestellter Wiederholpfeil 33 zurück zu dem ersten Block 9. Der Wiederholpfeil 33 deutet an, dass der gesamte in Figur 3 veranschaulichte Vorgang in regelmäßigen Zeitabständen entsprechend Schleifen (zum Beispiel alle 50 ms) wiederholt werden kann.

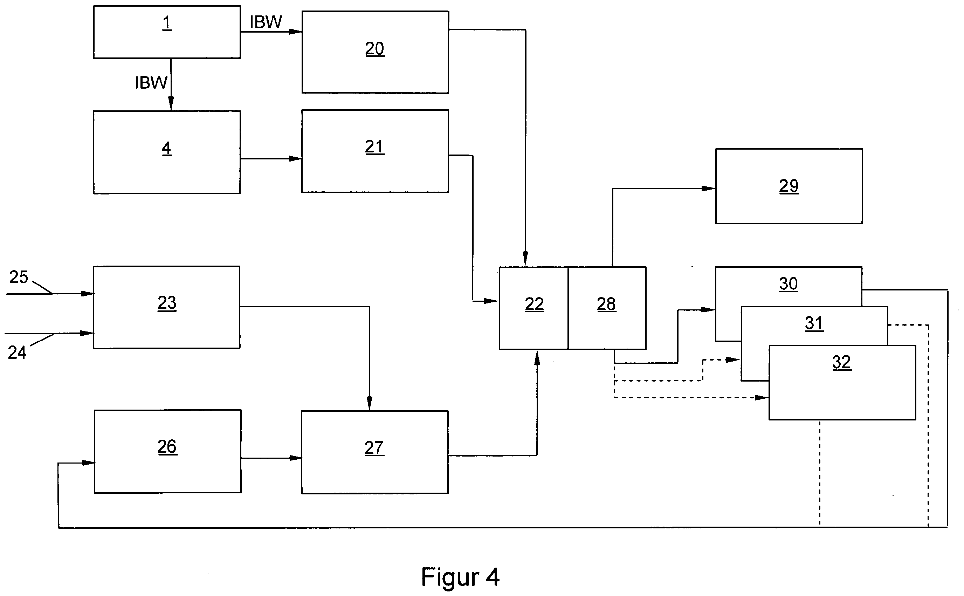

Figur 4 zeigt beispielhaft anhand eines weiteren Ablaufdiagramms einen Ausschnitt eines Verfahrens zu einer automatischen Regelung eines Abstandes zwischen einem zu regelnden Fahrzeug und einem dem zu regelnden Fahrzeug vorausfahrenden Fahrzeug, wobei der Ausschnitt ein Verfahren zum Abbremsen des zu regelnden Fahrzeugs darstellt, welches Verfahren zum Abbremsen Bestandteil des vorgenannten Verfahrens zu der automatischen Regelung des Abstandes ist. Das zu regelnde Fahrzeug weist eine Bremseinrichtung mit zumindest einer Dauerbremseinrichtung und einer einem Verschleiß unterliegenden Betriebsbremseinrichtung sowie eine Abstandsregeleinrichtung auf.

In einem Eingangsblock 1 wird mittels eines Abstandssensors der Abstandsregeleinrichtung des zu regelnden Fahrzeugs als Ist-Bewegungsgröße IBW ein Ist-Abstand des zu regelnden Fahrzeugs zu dem vorausfahrenden Fahrzeug erfasst. Die Ist-Bewegungsgröße IBW wird zum einen an einen Auswerteblock 4, in dem eine Bewertung der kinematischen Situation des zu regelnden Fahrzeugs - wie sie zum Beispiel oben in dem Ausführungsbeispiel nach Figur 3 beschrieben ist - vorgenommen wird, und zum anderen an einen Regelblock 20, in dem mittels eines Fahrzeuglängsreglers eine gewünschte Sollbewegungsgröße des zu regelnden Fahrzeugs berechnet wird, weitergegeben.

Die gewünschte Sollbewegungsgröße und ein ausgehend von der in dem Auswerteblock 4 vorgenommenen Bewertung der kinematischen Situation des zu regelnden Fahrzeugs in einem Zwischenblock 21 berechneter, minimal erforderlicher Eingriff der Betriebsbremseinrichtung in die Abbremsung des zu regelnden Fahrzeugs werden an einen Verteilungsblock 22 weitergegeben.

In einem zusätzlichen Stabilitätsbewertungsblock 23 erfolgt eine Bewertung eines Instabilitätspotentials des zu regelnden Fahrzeugs, und zwar beispielhaft - wie anhand eines ersten Eingangspfeils 24 symbolisiert - ausgehend von einem tatsächlichen Reibwert zwischen Reifen des zu regelnden Fahrzeugs und einer Fahrbahn, auf der sich das zu regelnde Fahrzeug bewegt, sowie - symbolisiert durch einen zweiten Eingangspfeil 25 - von einer Fahrzeugmasse und/oder einer Fahrzeugabmessung, insbesondere einem Fahrzeugradstand, und/oder einer Lage eines Fahrzeugschwerpunktes und/oder einer Wank- und Nickstabilität des zu regelnden Fahrzeugs; durch die Berücksichtigung des Reibwerts zwischen Reifen und Fahrbahn kann insbesondere ein Überbremsen von Antriebsrädern des Fahrzeugs verhindert werden. Anhand der Bewertung des Instabilitätspotentials in dem Stabilitätsbewertungsblock 23 sowie einer in einem Prüfblock 26 vorgenommenen Überprüfung einer Verfügbarkeit von Einzeldauerbremssystemen der Dauerbremseinrichtung des zu regelnden Fahrzeugs erfolgt in einem weiteren Zwischenblock 27 eine Berechnung einer maximalen Abbremsung des zu regelnden Fahrzeugs mittels der Dauerbremseinrichtung. Auch das Ergebnis dieser Berechnung wird an den Verteilungsblock 22 weitergegeben.

In dem Verteilungsblock 22 wird eine Verteilung der insgesamt zum Abbremsen des zu regelnden Fahrzeugs aufzubringenden Bremskraft auf Dauerbremseinrichtung und Betriebsbremseinrichtung bestimmt und an einen Bremsanforderungsblock 28 übermittelt, der die durch einen Endblock 29 symbolisierte Betriebsbremseinrichtung sowie die Dauerbremseinrichtung entsprechend der in dem Verteilungsblock 22 bestimmten Verteilung der Bremskraft auf Dauerbremseinrichtung und Betriebsbremseinrichtung ansteuert. Die Dauerbremseinrichtung wird durch einen ersten Dauerbremsblock 30, der für ein erstes Einzeldauerbremssystem, beispielsweise ein Motorbremssystem, der Dauerbremseinrichtung steht, einen optionalen zweiten Dauerbremsblock 31, der für ein zweites Einzeldauerbremssystem, zum Beispiel einen Retarder, steht und einen optionalen dritten Dauerbremsblock 32, der für ein drittes Einzeldauerbremssystem steht, symbolisiert. Verfügbarkeitsangaben der Einzeldauerbremssysteme werden von den Dauerbremsblöcken 30, 31, 32 an den Prüfblock 26 zur Überprüfung der Verfügbarkeit der Einzeldauerbremssysteme übermittelt.

## Patentansprüche

1. Verfahren zum Abbremsen eines eine einem Verschleiß unterliegende Betriebsbremseinrichtung und zumindest eine Dauerbremseinrichtung aufweisenden Fahrzeugs, insbesondere Kraftfahrzeugs, wobei eine Soll-Bewegungsgröße des Fahrzeugs mit einer Ist-Bewegungsgröße des Fahrzeugs verglichen wird und wobei bei einer eine Verminderung einer Längsbeschleunigung des Fahrzeugs zum Erreichen der Soll-Bewegungsgröße erfordernden Bewegungsgrößenabweichung der Ist-Bewegungsgröße von der Soll-Bewegungsgröße die Dauerbremseinrichtung die Längsbeschleunigung des Fahrzeugs vermindernd aktiviert wird, wobei eine Betriebsgröße (B) der Betriebsbremseinrichtung erfasst wird und dass in Abhängigkeit der Betriebsgröße (B) und der Bewegungsgrößenabweichung ($\Delta$BW) von Ist-Bewegungsgröße (IBW) und Soll-Bewegungsgröße (SBW) bei einer eine Verminderung der Längsbeschleunigung des Fahrzeugs zum Erreichen der Soll-Bewegungsgröße (SBW) erfordernden Bewegungsgrößenabweichung ($\Delta$BW) der Ist-Bewegungsgröße (IBW) von der Soll-Bewegungsgröße (SBW) zusätzlich die Betriebsbremseinrichtung die Längsbeschleunigung des Fahrzeugs vermindernd aktiviert wird, **dadurch gekennzeichnet, dass** bei einer erfassten Betriebsgröße (B) unterhalb einer Setz-Betriebsgröße (BS) und einer Bewegungsgrößenabweichung ($\Delta$BW) oberhalb einer ersten Setz-Bewegungsgrößenabweichung ($\Delta$BWS1) die Betriebsbremseinrichtung aktiviert wird, und bei einer erfassten Betriebsgröße (B) oberhalb der Setz-Betriebsgröße (BS) und einer Bewegungsgrößenabweichung ($\Delta$BW) oberhalb einer zweiten Setz-Bewegungsgrößenabweichung ($\Delta$BWS2), wobei die zweite Setz-Bewegungsgrößenabweichung ($\Delta$BWS2) größer ist als die erste Setz-Bewegungsgrößenabweichung ($\Delta$BWS1), die Betriebsbremseinrichtung aktiviert wird.

2. Verfahren nach Anspruch 1, **dadurch gekennzeichnet, dass** die Ist-Bewegungsgröße (IBW) eine Ist-Geschwindigkeit oder Ist-Beschleunigung des Fahrzeugs ist und dass die Soll-Bewegungsgröße (SBW) eine SollGeschwindigkeit oder Soll-Beschleunigung des Fahrzeugs ist.

3. Verfahren nach Anspruch 1, **dadurch gekennzeichnet, dass** die Ist-Bewegungsgröße (IBW) ein Ist-Abstand oder ein für einen zukünftigen Zeitpunkt vorausberechneter Ist-Abstand des Fahrzeugs zu einem in Fahrtrichtung vor dem Fahrzeug angeordneten Hindernis ist und dass die Soll-Bewegungsgröße (SBW) ein Soll-Abstand oder ein für einen zukünftigen Zeitpunkt vorausberechneter Soll-Abstand des Fahrzeugs zu dem Hindernis ist.

4. Verfahren nach Anspruch 1, **dadurch gekennzeichnet, dass** die Ist-Bewegungsgröße (IBW) ein Ist-Zeitabstand oder ein vorausberechneter Zeitraum bis zu einer potentiellen Kollision des Fahrzeugs mit einem in Fahrtrichtung vor dem Fahrzeug angeordneten Hindernis ist und dass die Soll-Bewegungsgröße (SBW) ein Soll-Zeitabstand oder ein Mindestzeitraum bis zu der potentiellen Kollision mit dem Hindernis ist.

5. Verfahren nach einem der vorangehenden Ansprüche, **dadurch gekennzeichnet, dass** die erfasste Betriebsgröße (B) eine Temperatur der Betriebsbremseinrichtung ist.

6. Verfahren nach einem der vorangehenden Ansprüche, **dadurch gekennzeichnet, dass** die Betriebsbremseinrichtung zumindest solange aktiviert wird, bis die Bewegungsgrößenabweichung (ΔBW) kleiner ist als die zweite Setz-Bewegungsgrößenabweichung (ΔBWS2).

7. Verfahren nach einem der vorangehenden Ansprüche, **dadurch gekennzeichnet, dass** ein Vergleich der erfassten Betriebsgröße (B) mit der Setz-Betriebsgröße (BS) und ein Vergleich der Bewegungsgrößenabweichung (ΔBW) mit der ersten und/oder der zweiten Setz-Bewegungsgrößenabweichung (ΔBWS1, ΔBWS2) in regelmäßigen Zeitabständen erfolgt.

8. Verfahren nach einem der vorangehenden Ansprüche, **dadurch gekennzeichnet, dass** das abzubremsende Fahrzeug einem vorausfahrenden Fahrzeug folgt und dass mittels einer Abstandsregeleinrichtung des abzubremsenden Fahrzeugs eine automatische Regelung eines Abstandes zwischen dem abzubremsenden Fahrzeug als zu regelndem Fahrzeug und dem vorausfahrenden Fahrzeug erfolgt.

9. Verfahren nach Anspruch 8, **dadurch gekennzeichnet, dass** die Ist-Bewegungsgröße (IBW) der für einen zukünftigen Zeitpunkt vorausberechnete Ist-Abstand des zu regelnden Fahrzeugs zu dem vorausfahrenden Fahrzeug ist und dass die Soll-Bewegungsgröße (SBW) ein vorgegebener Mindestabstand des zu regelnden Fahrzeugs zu dem vorausfahrenden Fahrzeug ist.

## Claims

1. Method for slowing down a vehicle, in particular a motor vehicle, having a service brake device, which is subject to wear, and at least one continuous service brake device, wherein a desired movement variable of the vehicle is compared with an actual movement variable of the vehicle and wherein a movement variable disparity between the actual movement variable and the desired movement variable requiring a decrease in a longitudinal acceleration of the vehicle to reach the desired movement variable causes the continuous service brake device to be activated so as to decrease the longitudinal acceleration of the vehicle, wherein an operating variable (B) of the service brake device is captured and wherein the operating variable (B) and the movement variable disparity (ΔBW) between the actual movement variable (IBW) and desired movement variable (SBW) are taken as a basis, in the event of a movement variable disparity (ΔBW) between the actual movement variable (IBW) and the desired movement variable (SBW) requiring a decrease in the longitudinal acceleration of the vehicle to reach the desired movement variable (SBW), for the service brake device to be additionally activated so as to decrease the longitudinal acceleration of the vehicle, **characterized in that**
a captured operating variable (B) below a set operating variable (BS) and a movement variable disparity (ΔBW) above a first set movement variable disparity (ΔBWS1) cause the service brake device to be activated, and
a captured operating variable (B) above the set operating variable (BS) and a movement variable disparity (ΔBW) above a second set movement variable disparity (ΔBWS2), wherein the second set movement variable disparity (ΔBWS2) is greater than the first set movement variable disparity (ΔBWS1), cause the service brake device to be activated.

2. Method according to Claim 1, **characterized in that** the actual movement variable (IBW) is an actual speed or actual acceleration of the vehicle and **in that** the desired movement variable (SBW) is a desired speed or desired acceleration of the vehicle.

3. Method according to Claim 1, **characterized in that** the actual movement variable (IBW) is an actual distance, or an actual distance computed in advance for a time in the future, of the vehicle from an obstacle arranged in front of the vehicle in the direction of travel and **in that** the desired movement variable (SBW) is a desired distance, or a desired distance computed in advance for a time in the future, of the vehicle from the obstacle.

4. Method according to Claim 1, **characterized in that** the actual movement variable (IBW) is an actual interval of time, or a period computed in advance, until a potential collision between the vehicle and an obstacle arranged in front of the vehicle in the direction of travel and **in that** the desired movement variable (SBW) is a desired interval of time or a minimum period until the potential collision with the obstacle.

5. Method according to one of the preceding claims, **characterized in that** the captured operating variable (B) is a temperature of the service brake device.

6. Method according to one of the preceding claims, **characterized in that** the service brake device is activated at least until the movement variable disparity (ΔBW) is less than the second set movement variable disparity (ΔBWS2).

7. Method according to one of the preceding claims, **characterized in that** a comparison between the captured operating variable (B) and the set operating variable (BS) and a comparison between the movement variable disparity (ΔBW) and the first and/or the second set movement variable disparity (ΔBWS1, ΔBWS2) take place at regular intervals of time.

8. Method according to one of the preceding claims, **characterized in that** the vehicle to be slowed down follows a vehicle travelling ahead and **in that** a distance control device of the vehicle to be slowed down is used to automatically control a distance between the vehicle to be slowed down as the vehicle to be controlled and the vehicle travelling ahead.

9. Method according to Claim 8, **characterized in that** the actual movement variable (IBW) is the actual distance of the vehicle to be controlled from the vehicle travelling ahead computed in advance for a time in the future and **in that** the desired movement variable (SBW) is a prescribed minimum distance of the vehicle to be controlled from the vehicle travelling ahead.

**Revendications**

1. Procédé de freinage d'un véhicule, en particulier d'un véhicule automobile, présentant un dispositif de freinage de service exposé à l'usure et au moins un dispositif de freinage permanent, dans lequel une grandeur de consigne de déplacement du véhicule est comparée à une grandeur effective de déplacement du véhicule et dans lequel lorsque l'accélération longitudinale du véhicule diminue, le dispositif de freinage permanent est activé pour diminuer l'accélération longitudinale du véhicule en vue d'atteindre la différence entre la grandeur de déplacement effective et la grandeur de déplacement de consigne nécessaire pour atteindre la grandeur de déplacement de consigne, une grandeur de fonctionnement (B) du dispositif de freinage de service étant saisie et le dispositif de freinage de service étant en outre activé pour diminuer l'accélération longitudinale du véhicule en fonction de la grandeur de fonctionnement (B) et de l'écart (ΔBW) entre la grandeur de déplacement effective (IBW) et la grandeur de déplacement de consigne (SBW) lorsque l'écart (ΔBW) entre la grandeur de déplacement effective (IBW) et la grandeur de déplacement de consigne (SBW) nécessite une diminution de l'accélération longitudinale du véhicule pour atteindre la grandeur de déplacement de consigne (SBW), **caractérisé en ce que** le dispositif de freinage de service est activé lorsque la grandeur de fonctionnement (B) qui a été saisie est située en dessous d'une grandeur de fonctionnement fixe (BS) et lorsque l'écart (ΔBW) entre les grandeurs de déplacement est situé au-dessus d'un premier écart fixe (ΔBWS1) entre les grandeurs de déplacement, et le dispositif de freinage de service est activé lorsque la grandeur de fonctionnement (B) saisie est supérieure à la grandeur de fonctionnement fixe (BS) et l'écart (ΔBW) entre les grandeurs de déplacement est situé au-dessus d'un deuxième écart fixe (ΔBWS2) entre les grandeurs de déplacement, le deuxième écart fixe (ΔBWS2) entre les grandeurs de déplacement étant supérieur au premier écart fixe (ΔBWS1) entre les grandeurs de déplacement.

2. Procédé selon la revendication 1, **caractérisé en ce que** la grandeur de déplacement effective (IBW) est une vitesse effective ou une accélération effective du véhicule et **en ce que** la grandeur de déplacement de consigne (SBW) est une vitesse de consigne ou une accélération de consigne du véhicule.

3. Procédé selon la revendication 1, **caractérisé en ce que** la grandeur de déplacement effective (IBW) est une distance effective ou une distance effective du véhicule, préalablement calculée pour un instant futur, par rapport à un obstacle situé en avant du véhicule dans sa direction de déplacement et **en ce que** la grandeur de déplacement de consigne (SBW) est une distance de consigne ou une distance de consigne du véhicule par rapport à un obstacle calculée préalablement pour un instant futur.

4. Procédé selon la revendication 1, **caractérisé en ce que** la grandeur de déplacement effective (IBW) est un écart temporel effectif ou un intervalle de temps préalablement calculé jusqu'à une collision éventuelle du véhicule avec un obstacle situé en avant du véhicule dans la direction de son déplacement et **en ce que** la grandeur de déplacement de consigne (SBW) est un écart temporel de consigne ou un intervalle de temps minimum jusqu'à la collision éventuelle avec l'obstacle.

5. Procédé selon l'une des revendications précédentes, **caractérisé en ce que** la grandeur de fonctionnement (B) est la température du dispositif de freinage de service.

6. Procédé selon l'une des revendications précédentes, **caractérisé en ce que** le dispositif de freinage de service est activé au moins jusqu'à ce que l'écart (ΔBW) entre les grandeurs de déplacement soit inférieur au deuxième écart fixe (ΔBWS2) entre les grandeurs de déplacement.

7. Procédé selon l'une des revendications précédentes, **caractérisé en ce qu'**une comparaison entre la grandeur de fonctionnement (B) et la grandeur de fonctionnement fixe (BS) et une comparaison entre l'écart (ΔBW) entre les grandeurs de déplacement et le premier et/ou le deuxième écart fixe (ΔBWS1, ΔBWS2) entre les grandeurs de déplacement s'effectue à des intervalles de temps réguliers.

8. Procédé selon l'une des revendications précédentes, **caractérisé en ce que** le véhicule à freiner si un véhicule circulant devant lui et **en ce qu'**au moyen d'un dispositif de régulation de distance du véhicule à freiner, une régulation automatique de la distance entre le véhicule à freiner, qui forme le véhicule à réguler, et le véhicule circulant devant lui a lieu.

9. Procédé selon la revendication 8, **caractérisé en ce que** la grandeur de déplacement effective (IBW) est la distance effective calculée préalablement pour un instant futur entre le véhicule à réguler et le véhicule circulant devant lui et **en ce que** la grandeur de déplacement de consigne (SBW) est une distance minimale prédéterminée du véhicule à réguler par rapport au véhicule circulant devant lui.

Figur 1

Figur 2

Figur 3

EP 1 860 008 B1

Figur 4

EP 1 860 008 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0179017 A1
- WO 9200212 A1
- WO 2005005191 A
- US 6456922 B1
- DE 10224399 A1